# EUROPEAN PATENT APPLICATION

(11) **EP 4 036 176 A1**
(43) Date of publication of application: **03.08.2022**
(21) Application number: 21154393.9
(22) Date of filing: 29.01.2021
(51) Int. Cl.: C09D 5/14, B32B 5/22, C08J 7/04

(54) **VIRUCIDAL COATING ARRANGEMENT**

(71) Applicant: Freie Universität Berlin, 14195 Berlin (DE)
(72) Inventor: HAAG, Rainer, 12209 Berlin (DE); DONSKY, Ievgen, 12249 Berlin (DE); CHUANXIONG, Nie, 13353 Berlin (DE); POUYRAN, Paria, 12165 Berlin (DE); AHMADI SOURESHJANI, Vahid, 14195 Berlin (DE); WAGNER, Olaf, 12163 Berlin (DE)
(74) Representative: Maikowski & Ninnemann Patentanwälte Partnerschaft mbB

(57) **Abstract**

The invention relates to a coating arrangement, comprising a first layer (4) and a second layer (7), wherein the first layer (4) comprises a first polymer (3) chosen from the group consisting of first hyperbranched polyglycerol derivatives, polyethylenimine, polyethylenimine derivatives, polyallylamine, and polyallylamine derivatives, wherein the second layer (7) comprises a second polymer (6) chosen from the group consisting of second polyglycerol derivatives. The second polyglycerol derivatives are linear or hyperbranched polyglycerol derivatives that are i) alkylated with an alkyl chain having at least 9 carbon atoms and ii) sulfated, sulfonated, carboxylated or phosphated, the first layer (4) is positively charged, the second layer (7) is negatively charged, and the second layer (7) adheres to the first layer (4) by electrostatic interactions. This coating arrangement exhibits excellent virucidal properties and is particularly appropriate to make substrates such as filter materials virucidal.

## Description

The present invention relates to a coating arrangement according to the preamble of claim 1, to a coating assembly comprising such a coating arrangement according to the preamble of claim 7, to the use of such a coating assembly according to the preamble of claim 10, as well as to a method for manufacturing a coating assembly according to the preamble of claim 11.

Pathogen infection is a severe public health problem. Global modernization enables people to travel through continents more easily than before, but it raises the possibility of a pandemic of highly infectious viruses. Vaccines cannot be developed until the viral antigens have been clearly identified, and the production and examination typically take years.¹

Precocious countermeasures are needed to prevent pathogen infection and transmission to control the spread of the virus. Highly infectious pathogens are predominantly spread via aerosols and surfaces, e. g. herpes simplex virus (HSV), influenza A virus (IAV), coronaviruses (HCoV-NL63, SARS-CoV-2 etc.), and bacteria.2

The enveloped virions, e.g. SARS-CoV-2, can remain active and contagious on surfaces for days.³ Hygienic measures are the most effective way to prevent pathogen infections.⁴ However, it requires intense cleaning efforts and massive material consumption of disinfectants, e. g. ethanol and isopropanol, to create a pathogen-free space. A surface coating with anti-pathogen activity is an alternative, which has been proven to be effective for controlling bacterial contaminations.⁵

Virus entry into the cell is driven by two types of interactions. Electrostatic interactions occur between negatively charged heparan sulfate (HS) present on the host cell surface and the positively charged virion surface.⁶⁻⁸

Inspired by HS on the cell surface and heparin, sulfated polymers, known as heparin mimetics, have been developed to have similar characteristics like HS.⁹ Synthetic sulfated polymers were shown to have antiviral activity against a broad range of viruses. Polyglycerol (PG) has a low cytotoxicity and shows an efficient *in-vivo* clearance. It might thus be appropriate for biological applications. In accordance to the antiviral effect of HS mimetics, multiple polyglycerol sulfate (PGS) carrying structures have been published to exhibit antiviral activity.¹⁰⁻¹³

It is an object of the present invention to provide a composition enabling the manufacture of self-disinfecting surfaces having virucidal ability.

This object is achieved with a coating arrangement having the features of claim 1. Such a coating arrangement comprises a first layer and a second layer. The first layer comprises a first polymer; the second layer comprises a second polymer. The first polymer is chosen from the group consisting of first hyperbranched polyglycerol derivatives, polyethylenimine, polyethylenimine derivatives, polyallylamine, and polyallylamine derivatives. The second polymer is chosen from the group consisting of second polyglycerol derivatives.

According to an aspect of the presently claimed invention, the second polyglycerol derivatives are linear or hyperbranched polyglycerol derivatives. These linear or hyperbranched polyglycerol derivatives share two common elements. On the one hand, they are alkylated with an alkyl chain having at least 9 carbon atoms, i.e., they bear an alkyl chain residue having a minimal length of C9. On the other hand, they are sulfated, sulfonated, carboxylated or phosphated, i.e., they bear a substituent in the nature of a sulfate group, a sulfonate group, a carboxyl group, or a phosphate group. The first layer is positively charged. Polyethylenimine, polyethylenimine derivatives, polyallylamine, and polyallylamine derivatives are naturally positively charged. Hyperbranched polyglycerol derivatives can bear a positive charge by carrying a substituent introducing a positive charge into the polyglycerol molecule.

Due to the sulfate or sulfonate substituent, the second layer is negatively charged. This enables the second layer to adhere to the first layer by electrostatic interactions. Expressed in other words, the coating arrangement is an assembly of two layers that are bound on top of each other electrostatically via a layer-by-layer technique (LbL technique).

The first layer serves for an adhesion or bonding of the coating arrangement to the surface of a substrate. The second layer exhibits virucidal properties and thus introduces such virucidal properties into the whole coating arrangement. Alkyl-modified substances have been shown to be virucidal by rupturing the envelope of viruses and thus destructing the viruses.^{14,15}

The term "virucidal" refers to a characterization of antiviral efficacy determined by *in vitro* testing demonstrating irreversible inhibition of the infectivity of a virus following interaction with an antiviral compound or composition. The interaction inhibits infectivity, e.g., by binding to the virus or otherwise interfering with the surface ligands of the virus. However, even following termination of the interaction (for example, by dilution) and absent any added materials or conditions promoting viral reconstitution, it is essentially impossible for the virus to resume infectivity. Interaction with antiviral compound or composition alters the virus, rendering it inert, and thereby prevents further infections.

The negatively charged second layer does not only rupture the envelopes of viruses due to the alkyl substituent, but also mimics the natural negative cell surface charge and thus enables an electrostatic binding to viruses.

In general, the coating arrangement is a thin virucidal polymeric coating that enables a modification of different surfaces via an LbL technique, providing the coating assembly with virucidal properties and the ability to apply a "catch and kill" mechanism to a surface equipped with the coating assembly. This catch and kill mechanism typically involves an active binding of the coating assembly to viruses due to electrostatic interactions and a subsequent destruction of the viruses based on hydrophobic interactions.

In an embodiment, the degree of substitution of the backbone of the second polymer with i) an alkyl chain and/or ii) with a sulfate or sulfonate lies independently from each other in a rage of from 5 % to 95 %, in particular of from 10 % to 90 %, in particular of from 15 % to 85 %, in particular of from 20 % to 80 %, in particular of from 25 % to 75 %, in particular of from 30 % to 70 %, in particular of from 35 % to 65 %, in particular of from 40 % to 60 %, in particular of from 45 % to 55 %. In this context, it will be apparent for a person skilled in the art that the degree of substitution of the second polymer with an alkyl chain and the degree of substitution of the second polymer with the sulfate or sulfonate can only be chosen such that the total degree of substitution does not exceed 100 %.

In an embodiment, the median carbon atom of a first glycerol unit in the linear polyglycerol derivative (C2 atom) is linked to one of the two terminal carbon atoms in a second glycerol unit (C1 atom) via an ether. Thereby, a 1,2-linkage between adjacent glycerol units in the linear polyglycerol derivative is formed. It can also be denoted as 2,1-linkage. In an embodiment, the terminal carbon atom of a first glycerol unit in the linear polyglycerol derivative (C1 or C3 atom) is linked to one of the two terminal carbon atoms in a second glycerol unit (C1 or C3 atom) via an ether. Thereby, a 1,3-linkage between adjacent glycerol units in the linear polyglycerol compound is formed. It can also be denoted as 3,1-linkage. In an embodiment, the individual glycerol units of the linear polyglycerol derivative are either exclusively 1,2-linked to each other or exclusively 1,3-linked to each other.

The general formulae of such 1,2-linked and 1,3-linked polyglycerol compounds are depicted below, wherein the meanings of the indicated residues in an embodiment are also indicated: 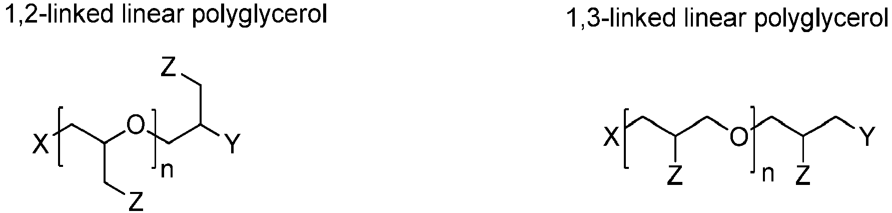 with
- n: = 5 to 1000,
- X, Y: = independently from each other any organic residue comprising or consisting of a functional group chosen from the group consisting of alcohol (i.e., unsubstituted polyglycerol), alkyl having at least 9 carbon atoms, amine, thiol, azide, alkyne, alkene, carboxylic acid, aldehyde, ketone, halogen, isocyanate, isothiocyanate, Michael acceptor/donor group, provided that at least one of X and Y is an alkyl having at least 9 carbon atoms,
- Z: = independently from other residues Z in the same polyglycerol molecule a negatively charged sulfate or sulfonate.

In an embodiment, the backbone of the linear polyglycerol derivative has a number average molecular weight (Mn) of 1 kDa to 100 000 kDa, in particular of 2 kDa to 90 000 kDa, in particular of 3 kDa to 80 000 kDa, in particular of 4 kDa to 70 000 kDa, in particular of 5 kDa to 60 000 kDa, in particular of 6 kDa to 50 000 kDa, in particular of 7 kDa to 40 000 kDa, in particular of 8 kDa to 30 000 kDa, in particular of 9 kDa to 20 000 kDa, in particular of 10 kDa to 10 000 kDa, in particular of 11 kDa to 5 000 kDa, in particular of 12 kDa to 1 000 kDa, in particular of 13 kDa to 750 kDa, in particular of 14 kDa to 500 kDa, in particular of 15 kDa to 400 kDa, in particular of 16 kDa to 300 kDa, in particular of 17 kDa to 200 kDa, in particular of 18 kDa to 100 kDa, in particular of 19 kDa to 90 kDa, in particular of 20 kDa to 80 kDa, in particular of 21 kDa to 70 kDa, in particular of 22 kDa to 60 kDa, in particular of 23 kDa to 50 kDa, in particular of 24 kDa to 40 kDa, in particular of 25 kDa to 30 kDa. Ranges of 2 kDa to 480 kDa, in particular of 2 kDa to 250 kDa, in particular of 2 kDa to 120 kDa, in particular of 2 kDa to 54 kDa, in particular of 1 kDa to 25 kDa are particularly well suited. Thereby, a combination with a degree of substitution of 70 % to 100 % is particularly well suited.

The number average molecular weight (Mn) is determined via gel permeation chromatography multi-angle light scattering (GPC-MALLS).

Particularly suited number average molecular weight (Mn) ranges of the backbone are 2 kDa to 6 kDa, in particular 2.5 kDa to 5.5 kDa, in particular 3 kDa to 5 kDa (in each case including the upper and lower limits). Particularly suited degrees of sulfation, especially to be used in combination with the before-mentioned particularly suited Mn ranges are between 50 % and 100 %, between 70 % and 100 %, between 85 % to 100 %, and in particular between 90 % to 100 %.

In an embodiment, the before-mentioned number average molecular weight ranges and degrees of sulfation are combined so as to result, e.g., in a linear polyglycerol compound having a number average molecular weight (Mn) of 2 kDa to 6 kDa and a degree of sulfation of 50 % to 100 %, in particular a number average molecular weight (Mn) of 2 kDa to 6 kDa and a degree of sulfation of 70 % to 100 %, in particular a number average molecular weight (Mn) of 2 kDa to 6 kDa and a degree of sulfation of 85 % to 100 %,in particular a number average molecular weight (Mn) of 2 kDa to 6 kDa and a degree of sulfation of 90 % to 100 %, in particular a number average molecular weight (Mn) of 2.5 kDa to 5.5 kDa and a degree of sulfation of 50 % to 100 %, in particular a number average molecular weight (Mn) of 2.5 kDa to 5.5 kDa and a degree of sulfation of 70 % to 100 %, in particular a number average molecular weight (Mn) of 2.5 kDa to 5.5 kDa and a degree of sulfation of 85 % to 100 %, in particular a number average molecular weight (Mn) of 2.5 kDa to 5.5 kDa and a degree of sulfation of 90 % to 100 %, in particular a number average molecular weight (Mn) of 3 kDa to 5 kDa and a degree of sulfation of 50 % to 100 %, in particular a number average molecular weight (Mn) of 3 kDa to 5 kDa and a degree of sulfation of 70 % to 100 %, in particular a number average molecular weight (Mn) of 3 kDa to 5 kDa and a degree of sulfation of 85 % to 100 %, in particular a number average molecular weight (Mn) of 3 kDa to 6 kDa and a degree of sulfation of 90 % to 100 %.

In an embodiment, the linear polyglycerol compound is end functionalized with a functional group chosen from the group consisting of azide, bromide, chloride, iodide, fluoride, primary amine, secondary amine, tertiary amine, carboxylic acids, thiols, disulfides, ketals, acetals, aldehydes, and of hydroxyl, isocyanate, isothiocyanate, unsaturated carbon-carbon units having double or triple bonds, a Michael acceptor (such as an α,β-unsaturated aldehyde, ketone, ester, carboxylic acid amide, carboxylic acid imide, such as maleimide, or an α,β-unsaturated nitrile) and a Michael donor (such as organic copper compounds, amines, thiols, phenolate ions, cyanides and acrylates). I.e., at least one terminus of the polyglycerol compound carries an according reactive group in this embodiment.

In an embodiment, the first polymer comprises a catechol group. Such a catechol group as a substituent of the first polymer enables a particularly stable interaction between the first layer and the surface to be coated by the coating arrangement. In an embodiment, the first polymer is a hyperbranched polyglycerol derivative carrying catechol substituents.

In an embodiment, the first polymer has a degree of functionalization with catechol groups of 1 to 100 %, in particular of 1 to 50 %, in particular 5 to 45 %, in particular 5 to 40 %, in particular 10 to 40 %, in particular 15 to 35 % and very particular 20 to 30 %. The degree of functionalization indicates the number of catechol-functionalized reactive groups of the polymer in relation to the total number of reactive groups of the polymer.

In an embodiment, the second polymer is devoid of catechol groups. By such an arrangement, it is particularly easy to control that no covalent bonds between catechol groups of the first polymer and catechol groups of the second polymer are formed. Thus, the lack of catechol groups in the second polymer facilitates the establishment of a (purely) electrostatic interaction between the first layer and the second layer.

In an embodiment, the second layer adheres to the first layer without any covalent interactions, in particular exclusively by electrostatic interactions. While van-der-Waals interactions can often not fully excluded, they are much weaker than electrostatic interactions so that two layers between which residual van-der-Waals interactions are present besides electrostatic interactions would still fulfil the feature of a purely electrostatic interaction.

In an embodiment, the first hyperbranched polyglycerol derivatives carry an amine substituent or a quaternary ammonium substituent. Primary amines or secondary amines are particularly appropriate amine substituents. Such amine substituents (characterized by an amino group) are particularly appropriate to introduce a positive charge into the hyperbranched polyglycerol derivatives. In an embodiment, the first polymer is a hyperbranched polyglycerol derivative carrying a catechol group as first substituent and an amino group as second substituent. Such a hyperbranched polyglycerol derivative can form particularly stable bonds to a surface of the substrate and has a positive charge that allows a stable electrostatic interaction to the second layer.

In an embodiment, the degree of substitution of the backbone of the first polymer with an amine substituent or a quaternary ammonium substituent lies in a rage of from 1 % to 99 %, in particular of from 5 % to 95 %, in particular of from 10 % to 90 %, in particular of from 15 % to 85 %, in particular of from 20 % to 80 %, in particular of from 25 % to 75 %, in particular of from 30 % to 70 %, in particular of from 35 % to 65 %, in particular of from 40 % to 60 %, in particular of from 45 % to 55 %.

In an embodiment, the alkylation of the second polyglycerol derivatives is effected by a C9 to C20 alkyl substituent, in particular by a C10 to C19 alkyl substituent, in particular by a C11 to C18 alkyl substituent, in particular by a C12 to C17 alkyl substituent, in particular by a C13 to C16 alkyl substituent, in particular by a C14 to C15 alkyl substituent. It is possible that the second polyglycerol derivatives carry more than one alkyl substituent, e.g., a C9 and a C11 alkyl substituent. However, manufacturing of the coating arrangement is easier if only a single alkyl substituent is present in the second polyglycerol derivatives. Alkyl chains of the before-mentioned lengths are particularly appropriate to provide the second layer with virucidal properties so as to be able to deactivate viruses irreversibly by interacting with a membrane or a capsid of the virus. Due to this deactivating interaction, there will be no chance of viruses such as HSV or SARS-Cov-2 to survive on a surface equipped with the coating arrangement. Consequently, the infectivity of such viruses is erased.

In an embodiment, the second polymer is a linear or hyperbranched polyglycerol derivative being covalently bound to a graphene molecule, in particular to nanographene.

In an aspect, the present invention relates to a coating assembly. Such coating assembly comprises a substrate and a coating arrangement according to the preceding explanations applied onto the substrate. As explained above, the coating arrangement comprises a first layer and a second layer. The first layer comprises a first polymer. In the coating assembly, the first polymer is covalently bound to the substrate. In contrast, the second layer is not bound to the substrate, but only adheres to the first layer by electrostatic interactions.

The coating assembly is not limited to specific substrates. Rather, a wide variety of different substrates can be used. In an embodiment, the substrate comprises or essentially consists of at least one compound chosen from the group consisting of titanium dioxide, aluminum, glass, silicon dioxide, polystyrene, polypropylene, polyethylene, polyvinyl chloride, graphene, and filter materials such as filter paper, cotton, cellulose, polymer fiber-based air filter materials (e.g., polyester, polyethylene, polypropylene, polyurethane, polyamide), cellulose acetate, polyethersulfone, and polyvinylidene fluoride.

In an embodiment, the filter materials are air filter materials, i.e., filter materials appropriate to filter particles from air.

In an embodiment, the coating assembly comprises a plurality (e.g., 2 to 10, in particular 3 to 9, in particular 4 to 8, in particular 5 to 7) of substrate layers, i.e., a plurality of individual layers of the substrate. In this embodiment, each substrate layer comprises the coating arrangement applied onto the substrate. Thus, the coating assembly is, in this embodiment, a multilayer assembly comprising a plurality of layers of virucidal substrate. Such a coating assembly is particularly appropriate to decrease the number of viruses present in the substance to be filtered, e.g. in air.

In an aspect, the present invention relates to the use of the coating assembly according to the preceding explanations as air filter or as protective facemask. If the coating assembly is used in form of such an air filter or as such a protective face mask, it may comprise one or more substrate layers coated with the coating arrangement. Thus, it is possible that the filter or facemask comprises a plurality of filter material layers, wherein only a single or a plurality or all of the present filter material layers are coated with the coating arrangement. Thus, it is possible to use the coating assembly to build up air filters or protective facemasks of different antiviral grades.

In an aspect, the present invention relates to a method for manufacturing a coating assembly according to the preceding explanations. This method comprises the steps explained in the following.

First, a substrate is immersed into a first coating solution. The first coating solution comprises a first polymer chosen from the group consisting of first hyperbranched polyglycerol derivatives, polyethylenimine, polyethylenimine derivatives, polyallylamine, and polyallylamine derivatives. This immersing serves for applying a first polymer layer onto the substrate. In this context, the first polymer layer is positively charged.

Afterwards, the substrate with the applied first polymer layer is optionally rinsed in a first rinsing solution. Such optional rinsing step serves for removing unbound first polymer from the substrate.

Afterwards, the substrate with the applied first polymer layer is dried. This can be achieved by heating the substrate to a desired temperature.

Afterwards, the substrate is immersed into a second coating solution. The second coating solution comprises a second polymer chosen from the group consisting of second polyglycerol derivatives. The second coating solution serves for applying a second polymer layer onto the first polymer layer. In this context, the second polyglycerol derivatives are linear or hyperbranched polyglycerol derivatives that are, on the one hand, alkylated and carry, on the other hand, sulfate groups or sulfonate groups. Furthermore, the second polymer layer is negatively charged. It adheres to the first polymer layer by electrostatic interactions.

Afterwards, the substrate with applied first and second polymer layers is optionally rinsed in a second rinsing solution. Such optional second rinsing step serves for removing unbound second polymer from the composite structure of substrate with applied first polymer layer.

Finally, the substrate with applied first and second polymer layers is dried. Once again, this can be achieved by heating the composite structure of substrate and applied first and second polymer layers to a desired temperature.

The application of the method is not limited to a specific substrate material. Rather, it is suited both for rigid and flexible substrates. Furthermore, neither the shape nor the geometry of the substrate limits the application of this manufacturing method.

In an embodiment, the concentration of the first polymer in the first polymer solution and of the second polymer the second polymer solution are independently chosen such to lie in a range of from 0.1 mg/mL to 10 mg/mL, in particular of from 0.5 mg/mL to 7.5 mg/mL in particular of from 0.75 mg/mL to 5 mg/mL, in particular of from 0.9 mg/mL to 3 mg/mL, in particular of from 1 mg/mL to 2 mg/mL. It is possible to choose the same concentration for the first polymer in the first polymer solution and for the second polymer in the second polymer solution.

In an embodiment, water or an aqueous solution is used as first rinsing solution and/or as second rinsing solution.

In an embodiment, the method is carried out in a discontinuous manner. This embodiment is particularly appropriate for rigid substrate materials. In this embodiment, the substrate is placed only in a single one of the first coating solution, the second coating solution, the first rinsing solution, and the second rinsing solution at the same time. After having been retracted from the respective solution, the substrate is transferred to the next solution and dipped into the next solution. Thus, the substrate is moved from one bath containing a first solution to a second bath containing a second solution, and so on. Plastic slices, silicon wafers and glass slides are particular appropriate substrates to be coated in this discontinuous manner.

In an alternative embodiment, the method is carried out in a continuous manner. This embodiment is particularly appropriate for more flexible materials that can be guided through the different solutions like an endless sheet of paper through a printing machine. When carrying out the method in a continuous manner, a first section of the substrate is placed in a first solution of the group comprising the first coating solution, the second coating solution, the first rinsing solution, and the second rinsing solution. At the same time, a second section of the substrates placed in a second solution of the group comprising the first coating solution, the second coating solution, the first rinsing solution, and the second rinsing solution. In this context, the first solution and the second solution are different. Then, it is possible to guide the first section of the substrate through the first coating solution to apply the first polymer layer onto the surface of the substrate and afterwards through the second coating solution to apply the second polymer layer onto the first polymer layer. In doing so, it is not necessary to individually dip the first section into the first coating solution and afterwards into the second coating solution. Rather, the first section of the substrate is automatically transported through the first coating solution and afterwards through the second coating solution.

In an embodiment, the substrate is guided in an endless manner from a substrate stock through the first coating solution, afterwards optionally through the first rinsing solution, afterwards through a first drying area, afterwards through the second coating solution, afterwards optionally through the second rinsing solution, and afterwards through a second drying area to reach finally a product deposit. In this embodiment, it is particularly easy to coat a bigger area of substrate with the coating arrangement in an automated, reliable and material efficient manner.

All embodiments of the coating arrangement can be combined in any desired manner and can be transferred either individually or in any arbitrary combination to the coating assembly, to the use and to the manufacturing method. Likewise, all embodiments of the coating assembly can be combined in any desired manner and can be transferred either individually or in any arbitrary combination to the coating arrangement, to the use, and to the manufacturing method. Furthermore, embodiments of the use can be combined in any desired manner and can be transferred either individually or in any arbitrary combination to the coating arrangement, to the coating assembly, or to the manufacturing method. Finally, all embodiments of the manufacturing method can be combined in any desired manner and can be transferred either individually or in any arbitrary combination to the coating arrangement, to the coating assembly, or to the use of the coating assembly.

Further details of aspects of the present invention will be explained in the following with respect to exemplary embodiments and accompanying Figures.

In the Figures:
- Figure 1: is a schematic representation of a laboratory scale layer-by-layer coating process;
- Figure 2A: is a schematic representation of an industrial surface dip-coating process in a discontinuous manner;
- Figure 2B: is a schematic representation of an industrial surface dip-coating process in a continuous manner;
- Figure 3A: shows dose-dependent HSV-1 inhibition curves for different hPGS-Cx samples in solution;
- Figure 3B: shows a graph on the virucidality of the hPGS-Cx samples of Figure 3A against HSV-1 ;
- Figure 4: shows a graph on the virus removal efficiency of hPGSS-C9 coated cellulose acetate;
- Figure 5A: shows dose-dependent HSV-1 inhibition curves for LPGS in solution;
- Figure 5B: shows a graph on the virus removal efficiency of LPGS-coated air filter (based on polyester as filter material);
- Figure 6A: shows the results of a virucidal assay for functionalized graphene on FCoV and SARS-CoV-2;
- Figure 6B: shows a schematic illustration of virus rupturing by nG-PGS-C11; and
- Figure 6C: shows virus removal efficiency of nG-PGS(C11) coated cellulose acetate.

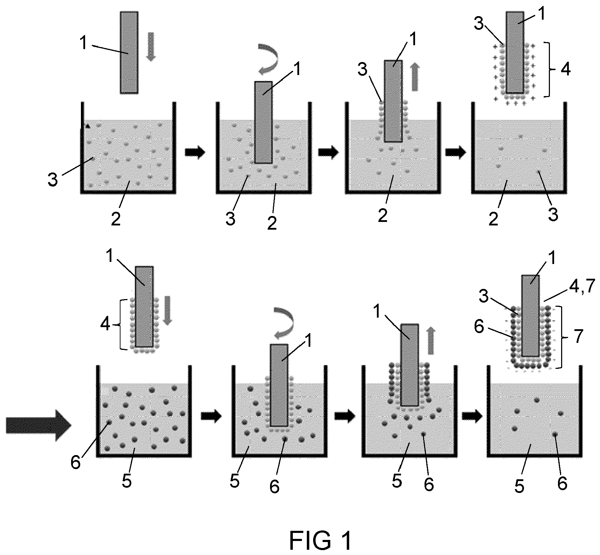

Figure 1 is a schematic representation of a laboratory-scale layer-by-layer coating process. In a first method step (upper row of Figure 1), the substrate 1 is dipped into a first coating solution 2 comprising a first polymer 3, namely, a hyperbranched polyglycerol modified with a primary amine to give the hyperbranched polyglycerol a positive charge. The substrate 1 is then agitated within the first coating solution 2 so that the first polymer 3 can attach to the surface of the substrate 1. Afterwards, the substrate 1 is removed from the first coating solution 2. As a result, a first layer 4 of the first polymer 3 is deposited on the surface of the substrate 1. This first layer 4 bears a positive charge due to the amino modification of the hyperbranched polyglycerol 3.

In a second method step (lower row of Figure 1), the substrate 1 already being coated with the first layer 4 is dipped into a second coating solution 5 comprising a second polymer 6, namely, an alkylated linear polyglycerol. The substrate 1 is then agitated within the second coating solution 5 so as to allow the deposition of the second polymer 6 on top of the first layer 4 of the first polymer 3.

Afterwards, the substrate is removed from the second coating solution 5. As a result, the substrate is coated with the first layer 4 of the first polymer 3 and a second layer 7 of the second polymer 6. Due to the sulfate groups of the alkylated linear polyglycerol sulfate 6, a negative charge results in the second layer 7. In this context, the second layer 7 adheres to the first layer 4 by electrostatic interactions only.

Due to the alkyl substituents of the alkylated linear polyglycerol sulfate 6, the second layer 7 exhibits virucidal properties and thus equips the substrate 1 with virucidal functionality.

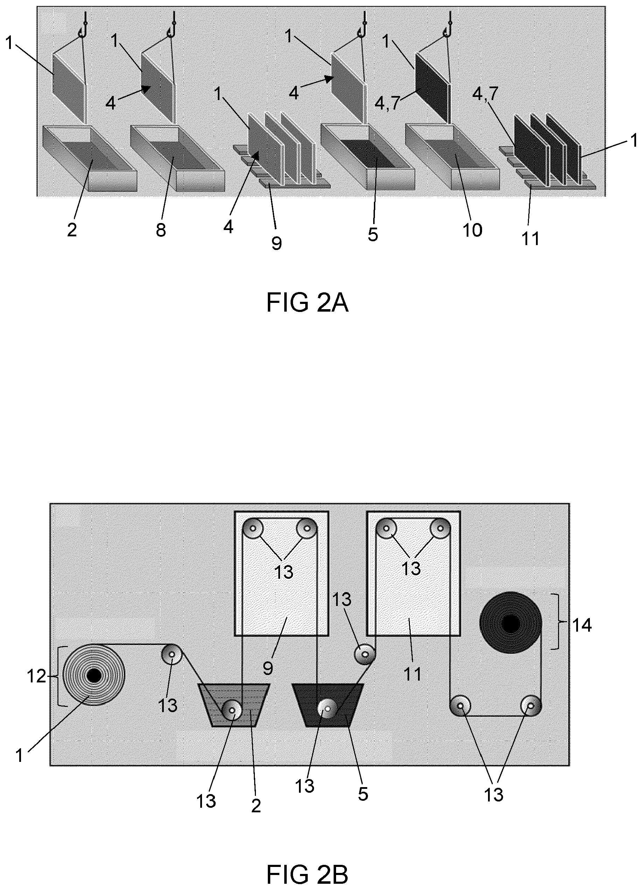

Figure 2A shows a schematic representation of a discontinuous industrial-scale manufacturing process for a coating arrangement. In this and in all following Figures, similar elements will be denoted with the same numeral references as in the other Figures.

A rigid substrate 1 is dipped into a first coating solution 2 comprising a first polymer (e.g., positively charged hyperbranched polyglycerol). After removing the substrate 1 from the first coating solution, the first polymer is applied in a first layer 4 on top of the surface of the substrate 1. The coated substrate 1 is then transferred to a first rinsing solution 8 to remove superfluous first polymer not tightly bound to the surface of the substrate 1. Afterwards, the coated and rinsed substrate is dried in a first drying appliance 9. Afterwards, the coated substrate 1 is dipped into a second coating solution 5 comprising a second polymer, e.g., a sulfated and alkylated linear polyglycerol. As a result, the second polymer is deposited on top of the first layer 4 of the first polymer to form a second layer 7 of the second polymer. The substrate 1 comprising a double layer 4, 7 of the first polymer and the second polymer is then dipped into a second rinsing solution 10 to remove superfluous second polymer from the surface of the first layer 4. Afterwards, the substrate 1 comprising the first layer 4 of the first polymer and the second layer 7 of the second polymer is transferred to a second drying appliance 11 to allow for drying of the double-coated substrate 1.

Figure 2B shows a schematic representation of a continuous industrial-scale manufacturing process for the coating assembly. In this continuous manufacturing process, a flexible substrate 1 is provided to the coating process from a substrate stock 12. The flexible substrate 1 has a normal uncoated surface. The substrate 1 is then guided over a plurality of rollers 13 in an endless manner through a first coating solution 2 comprising a first polymer, afterwards through a first heating chamber 9, afterwards through a second coating solution 5 comprising a second polymer, afterwards through a second heating chamber 11 and finally to a product deposit 14 serving for stocking the coated substrate 1. In doing so, the surface of the substrate 1 is first coated with the first polymer of the first coating solution 2 and - after the first drying step - with the second polymer of the second coating solution 5. In this context, the second polymer is placed on top of the first polymer. After the second drying step in the second drying chamber 11, the surface of the substrate 1 carries a double layer coating made from the first polymer deposited directly on the surface of the substrate 1 and of the second polymer deposited on top of the first polymer.

In the exemplary embodiment of Figure 2B, the substrate 1 is a flexible air filter material that is equipped by the manufacturing process explained with respect to Figure 2B with virucidal properties. If afterwards an air filter or a protective facemask is produced from this coated substrate 1, the respective product will have virucidal properties.

### Experimental details

### Synthesis of (hPGS-Cx)

Trimethylolpropane (180 mg, 1 mol), initiator, was deprotonated by potassium methoxide (KOH 30 mg dissolved in MeOH; MeOK, 15% deprotonation). Then, methanol was evaporated at 60 °C under vacuum (3 mbar). The synthesis-reactor was heated to 100 °C, and glycidol (7.5 g, 98.4 mmol, 70 eq.) was added slowly and stirred overnight. The second monomer, 9-(oxiran-2-yl)nonan-1 -ol (11 g, 59 mmol, 42 eq), was added after complete glycidol consumption, which was verified by the disappearance of associated proton peaks at 2.6 and 2.9 ppm of glycidol in H NMR spectra. Lastly, the temperature was decreased to 60 °C, and dimethylformamide and sulfur trioxide pyridine complex (48g, 300mmol, 1.5 eq.) were added to the system and stirred overnight. The reaction was stopped and the synthesized polymer then purified using tangential flow filtration (TFF), resulting in 25 grams of pure polymers (hPGS-C9). "C9" denotes a nonyl substituent. The same method was employed to obtain polymers with several aliphatic chains (hPGS-C6 (hexyl substituent) and hPGS-C3 (propyl substiuent)).

### 2.2. Synthesis of LPGS-Cx synthesis

Linear polyglycerol (LPG) is dissolved in dry DMF under inert atmosphere. Then NaH is added at 0°C and the solution is heated up until 50°C and stirred overnight. Then the virucidal hydrophobic linker (Cx) is added. The next day the reaction is quenched by addition of water and is dialysed against water for further purification. This procedure was done on 6kDa LPG with two modification degrees (20% and 70%).

### 2.3. Synthesis of nG-PGS-Cx.

Dispersion of nanographene polyglycerol sulfate (nG-PGS) (0.1 g) in DMF (10 mL) was ultrasonicated for 30 minutes at 25 °C. 1-Undecylamine (C₁₁H₂₃-NH₂) (14 µmol) was dissolved in DMF (5 mL) and mixed with nG-PGS dispersion at room temperature. Triethylamine (1.9 µL, 0.014 mmol) was added to the reaction flask after 30 minutes of stirring, further dispersion was heated till 60 °C, and stirred for further 2 days. Next, dialysis was performed (MWCO 20 kDa) against water/isopropanol 1/1 mixture for 5 days. Finally, solvents were evaporated, and the material was lyophilized (yield 75%).

*Virus propagation and titrations.* The GFP tagged HSV-1 was provided by AG Osterrieder in Institut für Virologie, Freie Universitat Berlin, and it was propagated on Vero cells for 2 days. The supernatant containing HSV-1 virions was collected and titrated by plaque assay on Vero cells. The cells were cultured for 2 days with an overlay medium of MEM with 0.5% methylcellulose (Sigma M0262). The plaques were read by fluorescent microscope (Zeiss Axiovert 100) in GFP channel and the titration was expressed as PFU/mL for the virus solutions.

### 2.4. Plaque reduction for the compounds.

The compounds were 10-fold diluted in 100 µL DMEM medium to 0.1 ng/mL, which were then incubated with 100 µL of HSV-1 solution (pre-diluted to 2000 PFU/mL) for 1 hour at 37 °C. Afterwards, the mixture was titrated by plaque assay on Vero cells as mentioned above. The inhibition ratios were estimated as following, the IC50 values were estimated by Graphpad Prism 7: Inhibition (%)=(1-(Plaque number (sample))/(Plaque number (virus control)))x100%

### 2.5. Virus removal test of the surfaces.

The samples were firstly disinfected by ethanol for 10 min. The virus stock was diluted to 1000 PF/mL in DMEM medium, each sample was incubated with 500µL virus solution at 25 °C. After 30 min, 1 hour and 2 hours, 20 µL of virus solution was taken for plaque assay to investigate the active virions. After 2 hours, the samples were slightly rinsed with PBS and then immersed into 500 µL fresh DMEM medium with vigorous shaking for 2 hours. Finally, the number of virions in the washing solution was investigated by plaque assay.

### Results

### hPGS-Cx

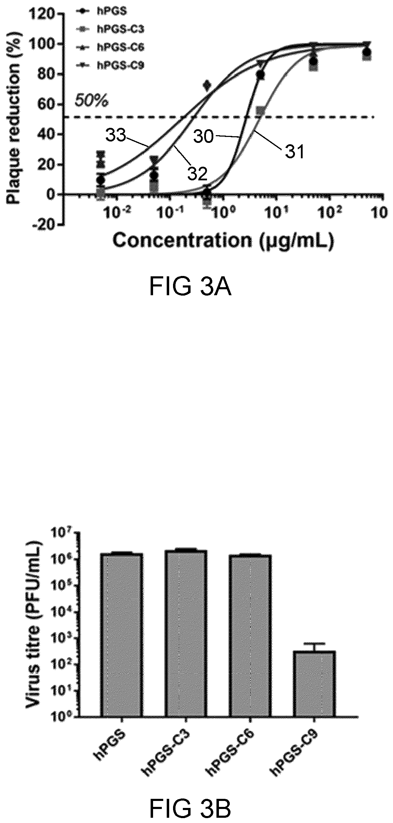

The hPGS-Cx compounds, in particular the hPGS-C9 compounds can inhibit HSV-1 growth effectively. They all exhibit IC50 values < 2 µg/mL. hPGS-C9 is the most potent one with IC50 value of 0.3 µg/mL. The virucidal assay confirms that hPGS-C9 is virucidal with 4 orders of magnitudes decrease of virus titer (cf. Figure 3A). Figure 3A shows dose-dependent HSV-1 inhibition curves for different hPGS-Cx samples in solution. Curve 30 denotes hPGS (without alkylation), curve 31 denotes hPGS-C3, curve 32 denotes hPGS-C6, and curve 33 denotes hPGS-C9.

However, inhibition of virus growth does not automatically imply a destruction of viruses, i.e., a virucidal activity. Figure 3B shows the virucidality of the samples used in Figure 3A against HSV-1. It can be seen that hPGS, hPGS-C3 and hPGS-C6 were apparently not able to destroy the viruses. Rather, after having diluted the solutions comprising the different hPGS compounds and HSV-1 viruses such that the binding between the hPGS compounds and the viruses was released, the HSV-1 viruses were able to grow again.

In contrast, hPGS-C9 was able to destroy a large number of viruses so that the final virus titer in the virucidal assay was four orders of magnitude smaller than in case of prior incubation with any of the other hPGS compounds. This clearly shows the superiority of hPGS-C9 against an hPGS being alkylated with shorter alkyl chains. Preliminary results also revealed that an alkylation with longer alkyl chains is likewise appropriate to exhibit a virucidal activity against different viruses.

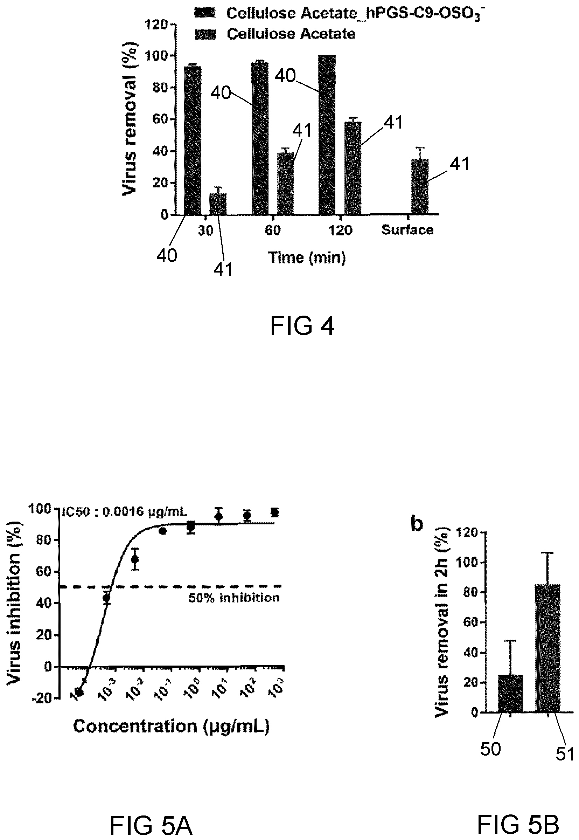

Figure 4 shows the virus removal efficiency of hPGS-C9 coated cellulose acetate. Bars 40 denote cellulose acetate coated with a coating arrangement having hPGS-C9-OSO₃⁻ as second polymer, and bars 41 denote cellulose acetate (uncoated).

It is apparent that hPGS-C9-coated cellulose acetate surface can effectively remove virus from the solution (> 99.9% in 2 hours). After two hours, there are no virions being detected on the surface, indicating that the virus has been destroyed upon contacting the surface. It validated the virucidal activity of the coating.

### 3.2. LPGS-Cx

LPGS can inhibit HSV-1 growth very potently with an IC50 value of 1.6 ng/mL. The polymer can be coated onto commercial air filters with hPG or PEI as the first layer of coating. After LPGS coating, the air filter can remove and destroy HSV-1 from solution efficiently (>80% within 2 hours) (Figure 5). Figure 5A shows dose-dependent HSV-1 inhibition curves for LPGS-C9 in solution. Figure 5B shows the virus removal efficiency of an LPGS-C9 coated air filter (based on polyester as filter material), wherein bar 50 denotes a commercial air filter without any specific coating, and bar 51 denotes the same air filter material with hyperbranched polyglycerol or polyethylenimine as first coating layer and LPGS-C9 as second polymer.

### 3.3. nG-PGS-C11

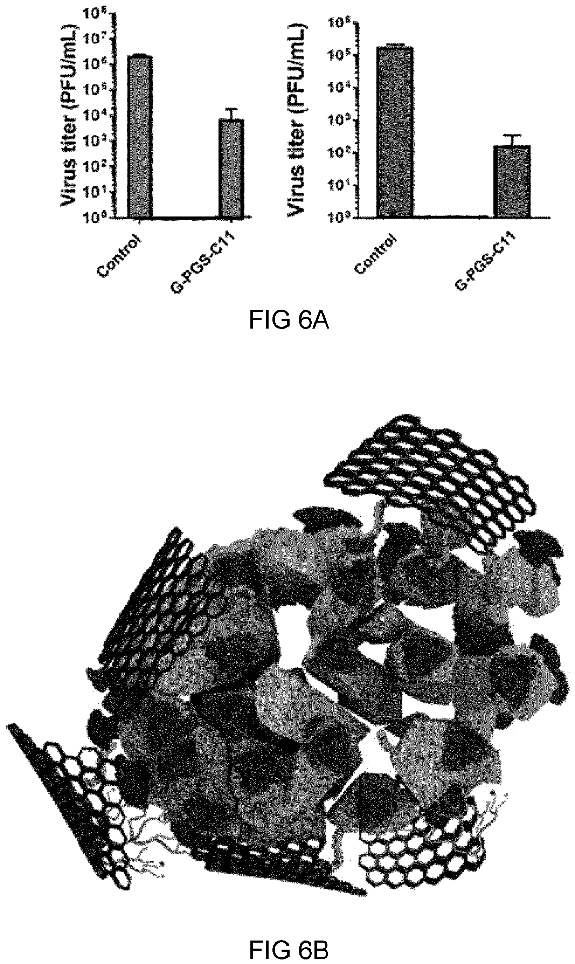

To test the virucidal potential of the nG-PGS-C11, FCoV (> 10⁶ PFU) and SARS-CoV-2 virions were incubated with nG-PGS-C11 at 1000 times higher concentration than IC50 values for one hour. The number of active virions was analyzed by plaque reduction assay after dilution of nG-PGS-C11 to a concentration 10-times lower than its IC50 (cf. Figure 6A). In case of SARS-CoV-2 nG-PGS-C11 showed strong inhibition with IC50 of 0.8 ± 0.3 µg/mL. In case of both virus types nG-PGS-C11 showed a clear reduction of active virions significantly below the IC50 values and nG-PGS-C11 was therefore considered as virucidal compound. Figure 6B shows a schematic illustration of virus rupturing by nG-PGS-C11.

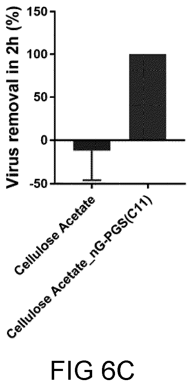

The nG-PGS(C11) were coated onto a cellulose acetate surface with PEI as the first layer. The coated filter can remove HSV-1 in the solution efficiently (>99.9% within 2 hours), as can be seen from the results depicted in Figure 6C. This shows the high potential of a coated virucidal material for antiviral coatings.

### List of references cited in the preceding sections

1. Thanh Le, T.; Andreadakis, Z.; Kumar, A.; Gomez Roman, R.; Tollefsen, S.; Saville, M.; Mayhew, S., The COVID-19 vaccine development landscape. Nat Rev Drug Discov2020, 19 (5), 305-306.
2. Wiersinga, W. J.; Rhodes, A.; Cheng, A. C.; Peacock, S. J.; Prescott, H. C., Pathophysiology, Transmission, Diagnosis, and Treatment of Coronavirus Disease 2019 (COVID-19): A Review. JAMA 2020, 324 (8), 782-793.
3. van Doremalen, N.; Bushmaker, T.; Morris, D. H.; Holbrook, M. G.; Gamble, A.; Williamson, B. N.; Tamin, A.; Harcourt, J. L.; Thornburg, N. J.; Gerber, S. I.; Lloyd-Smith, J. O.; de Wit, E.; Munster, V. J., Aerosol and Surface Stability of SARS-CoV-2 as Compared with SARS-CoV-1. New England Journal of Medicine 2020, 382 (16), 1564-1567.
4. Hirose, R.; Ikegaya, H.; Naito, Y.; Watanabe, N.; Yoshida, T.; Bandou, R.; Daidoji, T.; Itoh, Y.; Nakaya, T., Survival of SARS-CoV-2 and influenza virus on the human skin: Importance of hand hygiene in COVID-19. Clin Infect Dis 2020.
5. Kaur, R.; Liu, S., Antibacterial surface design - Contact kill. Progress in Surface Science 2016, 91 (3), 136-153.
6. Sarrazin, S.; Lamanna, W. C.; Esko, J. D., Heparan sulfate proteoglycans. Cold Spring Harb Perspect Biol 2011, 3(7).
7. Shieh, M. T.; WuDunn, D.; Montgomery, R. I.; Esko, J. D.; Spear, P. G., Cell surface receptors for herpes simplex virus are heparan sulfate proteoglycans. Journal of Cell Biology 1992, 116 (5), 1273-1281.
8. Ma, G.; Azab, W.; Osterrieder, N., Equine herpesviruses type 1 (EHV-1) and 4 (EHV-4)--masters of co-evolution and a constant threat to equids and beyond. Vet Microbiol 2013, 167 (1-2), 123-34.
9. Paluck, S. J.; Nguyen, T. H.; Maynard, H. D., Heparin-Mimicking Polymers: Synthesis and Biological Applications. Biomacromolecules 2016, 17 (11), 3417-3440.
10. Dey, P.; Bergmann, T.; Cuellar-Camacho, J. L.; Ehrmann, S.; Chowdhury, M. S.; Zhang, M.; Dahmani, I.; Haag, R.; Azab, W., Multivalent Flexible Nanogels Exhibit Broad-Spectrum Antiviral Activity by Blocking Virus Entry. ACS Nano 2018, 12 (7), 6429-6442.
11. Donskyi, I.; Drüke, M.; Silberreis, K.; Lauster, D.; Ludwig, K.; Kühne, C.; Unger, W.; Böttcher, C.; Herrmann, A.; Dernedde, J.; Adeli, M.; Haag, R., Interactions of Fullerene-Polyglycerol Sulfates at Viral and Cellular Interfaces. Small 2018, 14 (17), e1800189.
12. Donskyi, I. S.; Azab, W.; Cuellar-Camacho, J. L.; Guday, G.; Lippitz, A.; Unger, W. E. S.; Osterrieder, K.; Adeli, M.; Haag, R., Functionalized nanographene sheets with high antiviral activity through synergistic electrostatic and hydrophobic interactions. Nanoscale 2019, 11 (34), 15804-15809.
13. R. Haag, B. Z., A. Nitsche, Verfahren zur Synthese von verlinkten multivalenten Polyglycerol-Architekturen auf Graphen-Plattformen zur Inhibition von Viren und Bakterien. 2015. DE 102015206814**.**
14. Jones, S. T.; Cagno, V.; Janeček, M.; Ortiz, D.; Gasilova, N.; Piret, J.; Gasbarri, M.; Constant, D. A.; Han, Y.; Vukovic, L.; Král, P.; Kaiser, L.; Huang, S.; Constant, S.; Kirkegaard, K.; Boivin, G.; Stellacci, F.; Tapparel, C., Modified cyclodextrins as broad-spectrum antivirals. Science Advances 2020, 6 (5), eaax9318.
15. Cagno, V.; Andreozzi, P.; D'Alicarnasso, M.; Jacob Silva, P.; Mueller, M.; Galloux, M.; Le Goffic, R.; Jones, S. T.; Vallino, M.; Hodek, J.; Weber, J.; Sen, S.; Janeček, E.-R.; Bekdemir, A.; Sanavio, B.; Martinelli, C.; Donalisio, M.; Rameix Welti, M.-A.; Eleouet, J.-F.; Han, Y.; Kaiser, L.; Vukovic, L.; Tapparel, C.; Král, P.; Krol, S.; Lembo, D.; Stellacci, F., Broad-spectrum non-toxic antiviral nanoparticles with a virucidal inhibition mechanism. Nature Materials 2018, 17 (2), 195-203.

## Claims

1. Coating arrangement, comprising a first layer (4) and a second layer (7), wherein the first layer (4) comprises a first polymer (3) chosen from the group consisting of first hyperbranched polyglycerol derivatives, polyethylenimine, polyethylenimine derivatives, polyallylamine, and polyallylamine derivatives, wherein the second layer (7) comprises a second polymer (6) chosen from the group consisting of second polyglycerol derivatives,
**characterized**
**in that** the second polyglycerol derivatives are linear or hyperbranched polyglycerol derivatives that are i) alkylated with an alkyl chain having at least 9 carbon atoms and ii) sulfated, sulfonated, carboxylated or phosphated, in that the first layer (4) is positively charged, in that the second layer (7) is negatively charged and in that the second layer (7) adheres to the first layer (4) by electrostatic interactions.

2. Coating arrangement according to claim 1, **characterized in that** the first polymer (3) comprises a catechol group.

3. Coating arrangement according to claim 1 or 2, **characterized in that** the second polymer (6) is devoid of catechol groups.

4. Coating arrangement according to any of the preceding claims, **characterized in that** the second layer (7) adheres to the first layer (4) without covalent interactions.

5. Coating arrangement according to any of the preceding claims, **characterized in that** the first hyperbranched polyglycerol derivatives carry an amine substituent or a quaternary ammonium substituent.

6. Coating arrangement according to any of the preceding claims, **characterized in that** the second polyglycerol derivatives carry a C9 to C20 alkyl substituent.

7. Coating assembly, comprising a substrate (1) and a coating arrangement according to any of the preceding claims applied onto the substrate (1), wherein the coating arrangement comprises a first layer (4) and a second layer (7), wherein the first layer comprises (4) a first polymer covalently bound to the substrate (1), wherein the second layer (7) adheres to the first layer (4) by electrostatic interactions.

8. Coating assembly according to claim 7, **characterized in that** the substrate (1) comprises at least one compound chosen from the group consisting of titanium dioxide, aluminum, glass, silicon dioxide, polystyrene, polypropylene, polyethylene, polyvinyl chloride, graphene, and filter materials such as filter paper, cotton, cellulose, polymer fiber-based air filter materials, polyurethane, polyamide, cellulose acetate, polyethersulfone, and polyvinylidene fluoride.

9. Coating assembly according to claim 7 or 8, **characterized in that** the coating assembly comprises a plurality of substrate layers, wherein each substrate layer comprises the coating arrangement applied onto the substrate (1).

10. Use of a coating assembly according to any of claims 7 to 9 as air filter or as protective facemask.

11. Method for manufacturing a coating assembly according to any of claims 7 to 9, comprising the following steps:
a) immersing a substrate (1) into a first coating solution (2) comprising a first polymer (3) chosen from the group consisting of first hyperbranched polyglycerol derivatives, polyethylenimine, polyethylenimine derivatives, polyallylamine, and polyallylamine derivatives, to apply a first polymer layer (4) onto the substrate (1), wherein the first polymer layer (4) is positively charged;
b) optionally rinsing the substrate (1) with applied first polymer layer (4) in a first rinsing solution (8);
c) drying the substrate (1) with applied first polymer layer (4);
d) immersing the substrate (1) into a second coating solution (5) comprising a second polymer (6) chosen from the group consisting of second polyglycerol derivatives to apply a second polymer layer onto the first polymer layer (4), wherein the second polyglycerol derivatives are linear or hyperbranched polyglycerol derivatives that are i) alkylated with an alkyl chain having at least 9 carbon atoms and ii) sulfated, sulfonated, carboxylated or phosphated, wherein the second polymer layer (7) is negatively charged and wherein the second polymer layer (7) adheres to the first polymer layer (4) by electrostatic interactions;
e) optionally rinsing the substrate (1) with applied first and second polymer layers (4, 7) in a second rinsing solution (10); and
f) drying the substrate (1) with applied first and second polymer layers (4, 7).

12. Method according to claim 11, **characterized in that** the method is carried out in a discontinuous manner, wherein the substrate (1) is placed only in one of the first coating solution (2), the second coating solution (5), the first rinsing solution (8), and the second rinsing solution (10) at the same time.

13. Method according to claim 11, **characterized in that** the method is carried out in a continuous manner, wherein a first section of the substrate (1) is placed in a first solution of the group comprising the first coating solution (2), the second coating solution (5), the first rinsing solution (8), and the second rinsing solution (10), wherein a second section of the substrate is placed at the same time in a second solution of the group comprising the first coating solution (2), the second coating solution (5), the first rinsing solution (8), and the second rinsing solution (10), wherein the first solution and the second solution are different.

14. Method according to claim 13, **characterized in that** the substrate is guided in an endless manner from a substrate stock (12) through the first coating solution (2), optionally through the first rinsing solution (8), through a first drying area (9), through the second coating solution (5), optionally through the second rinsing solution (10), and through a second drying area (11) to a product deposit (14).
